# EUROPEAN PATENT APPLICATION

(11) **EP 4 421 971 A1**
(43) Date of publication of application: **28.08.2024**
(21) Application number: 23864125.2
(22) Date of filing: 09.01.2023
(51) Int. Cl.: H01M 50/533, H01M 4/13

(54) **ELECTRODE SHEET OF BATTERY, ELECTRODE ASSEMBLY, BATTERY CELL, BATTERY, AND ELECTRIC DEVICE**

(71) Applicant: Contemporary Amperex Technology Co., Limited, Ningde City, Fujian PRC 352100 (CN)
(72) Inventor: XUE, Qingrui, Ningde City, Fujian 352100 (CN); ZHANG, Zige, Ningde City, Fujian 352100 (CN); LI, Wei, Ningde City, Fujian 352100 (CN); ZHANG, Yu, Ningde City, Fujian 352100 (CN); ZHAO, Zhengyuan, Ningde City, Fujian 352100 (CN); ZHANG, Jinsong, Ningde City, Fujian 352100 (CN)
(74) Representative: Rowlands, Stuart Michael
(86) International application number: PCT/CN2023/071408
(87) International publication number: WO 2024/148474

(57) **Abstract**

Embodiments of this application provide a battery electrode plate, an electrode assembly, a battery cell, a battery, and an electric device, which can improve battery safety. Specifically, the battery electrode plate according to an embodiment of this application includes a current collector, an active substance layer, and a conductive structure, where the current collector includes a main body portion and a tab portion disposed in a first direction, where the main body portion is covered with the active substance layer and the tab portion is not covered with the active substance layer; a first region of the conductive structure is welded to a portion of the tab portion to form a welding mark zone; and the welding mark zone is at least partially covered with a protective layer.

## Description

### TECHNICAL FIELD

This application relates to the technical field of batteries, and in particular, to a battery electrode plate, an electrode assembly, a battery cell, a battery, and an electric device.

### BACKGROUND

As technology continues to advance, power batteries are widely used in a variety of fields such as energy storage power systems, electric transportation vehicles, military equipment, and aerospace. The improvement of battery technology is crucial.

In the development of battery technology, performance and safety issues of batteries cannot be ignored. Therefore, enhancing the safety of batteries is an urgent problem to be addressed in battery technology.

### SUMMARY

Embodiments of this application provide a battery electrode plate, an electrode assembly, a battery cell, a battery, and an electric device, which can improve battery safety.

According to a first aspect, a battery electrode plate is provided, including a current collector, an active substance layer, and a conductive structure; where the current collector includes a main body portion and a tab portion disposed in a first direction, where the main body portion is covered with the active substance layer and the tab portion is not covered with the active substance layer; and a first region of the conductive structure is welded to a portion of the tab portion to form a welding mark zone, at least a portion of the welding mark zone being covered with a protective layer.

In the embodiments of this application, with the protective layer applied to at least a portion of the welding mark zone between the current collector and the conductive structure, the protective layer can cover metal particles generated in the welding mark zone due to the welding process. This can prevent the metal particles from piercing through the separator and leading to short circuit in the battery, improving battery safety.

In a possible embodiment, the current collector includes a first support layer and a metal layer provided on each of the two sides of the first support layer; and the conductive structure is welded to a portion of the metal layer of the tab portion to form the welding mark zone.

In the above embodiment, with the current collector of a three-layer structure and the conductive structure welded to the current collector, it is possible to improve the conductivity of the current collector while reducing the weight of the battery.

In a possible embodiment, the conductive structure includes a second region, the first region, and a third region disposed in the first direction, where the second region is closer to the main body portion relative to the first region, the third region is farther away from the main body portion relative to the first region, and an edge of the second region closer to the main body portion is covered with the protective layer.

In the above embodiment, with the protective layer covering the edge of the second region, it is possible to prevent the edge of the second region of the conductive structure from piercing through the separator and leading to short circuit in the battery, improving the safety of the battery.

In a possible embodiment, the second region is covered with the protective layer.

In the above embodiment, the risk of piercing through the separator when the second region is folded over can be avoided, improving the safety of the battery.

In a possible embodiment, size L5 of the protective layer in the first direction is greater than or equal to a sum of size L3 the welding mark zone in the first direction and size L2 of the second region in the first direction.

In the above embodiment, the size of the protective layer in the first direction is set such that the protective layer covers the welding mark zone and the second region, preventing the metal particles present in the welding mark zone and the second region from piercing through the separator, thereby improving the safety of the battery.

In one possible embodiment, L3 ranges from 2 mm to 8 mm.

In the above embodiment, with the welding mark zone limited to remain within a specified size range, it is possible to maintain process stability of battery production and a higher energy density of the battery while ensuring the current flow capability of the conductive structure.

In one possible embodiment, L2 ranges from 0 mm to 1 mm.

In the above embodiment, with the size L2 of the second region of the conductive structure in the first direction limited to be greater than or equal to 0 mm, it is possible to prevent the current collector from being pressed by a weld head in welding, thereby avoiding damage to the current collector without affecting the conductivity and long-term stability of the current collector. In addition, with L2 limited to be less than or equal to 1 mm, it is possible to avoid folding of the conductive structure and other problems, thereby improving the safety of the battery.

In a possible embodiment, size of the protective layer in the second direction is greater than or equal to size of the conductive structure in the second direction, where the second direction is in a thickness direction of the electrode plate, and the second direction is perpendicular to the first direction.

In the above embodiment, with the size of the protective layer in the second direction limited to be greater than or equal to the size of the conductive structure in the second direction, it is possible to ensure that a sharp portion of the edge of the conductive structure is completely covered, completely avoiding the possibility of the edge of the conductive structure piercing through the separator.

In a possible embodiment, in the second direction, a surface of the protective layer farther away from the current collector does not exceed beyond a surface of the active substance layer farther away from the current collector.

In the above embodiment, the protective layer does not protrude from the surface of the electrode plate, thereby avoiding the problem of edge curling during the winding process of the electrode plate and ensuring high production efficiency of the battery.

In a possible embodiment, the protective layer is an insulation adhesive.

In the above embodiment, the insulation adhesive covers metal particles that may pierce through the separator, thereby further reducing the risk of short circuit in the battery.

In a possible embodiment, a second insulation layer is applied between the conductive structure and the active substance layer.

In the above embodiment, the second insulation layer can prevent both the active material and the welding mark zone from being cut during the laser cutting of the tab, thereby improving the production efficiency of the battery.

In a possible embodiment, the second insulation layer has a size L1 of 1 mm-3 mm in the first direction.

In the above embodiment, limiting the size of the second insulation layer in the first direction can avoid affecting battery safety due to the size of the second insulation layer in the first direction.

In a possible embodiment, in the second direction, a surface of the protective layer farther away from the current collector exceeds a surface of the second insulation layer farther away from the current collector, where the second direction is in a thickness direction of the electrode plate, and the second direction is perpendicular to the first direction.

In the above embodiment, with the surface of the protective layer farther away from the current collector exceeding the surface of the second insulation layer farther away from the current collector, that is, with the outer surface of the protective layer exceeding the outer surface of the second insulation layer, it is possible to ensure that the edge of the conductive structure is completely covered to prevent the edge of the conductive structure from piercing through the separator, ensuring the safety of the battery.

In a possible embodiment, the protective layer and the second insulation layer at least partially overlap.

In the above embodiment, the protective layer and the second insulation layer are disposed to at least partially overlap. Since the second insulation layer may abut against the conductive structure or there may be a gap between them, with the protective layer and the second insulation layer that are disposed to overlap it is possible to ensure that the protective layer completely covers the edge of the conductive structure, ensuring the safety of the battery.

In a possible embodiment, size of the welding mark zone in the second direction is less than or equal to a sum L6 of sizes of the current collector and the active substance layer in the second direction, where the second direction is in a thickness direction of the electrode plate, and the second direction is perpendicular to the first direction.

In the above embodiment, limiting the size of the welding mark zone in the second direction can avoid the problem of edge curling during the winding of the electrode plate, ensuring high production efficiency of the battery.

According to a second aspect, an electrode assembly is provided, including the electrode plate according to the first aspect described above or according to any possible embodiment of the first aspect.

In one possible embodiment, the electrode assembly further includes a separator, and a surface of the protective layer farther away from the current collector abuts against a surface of the separator closer to the electrode plate in a second direction, where the second direction is in a thickness direction of the electrode plate, and the second direction is perpendicular to the first direction.

In the above embodiment, with the surface of the protective layer farther away from the current collector being set to abut against the surface of the separator closer to the electrode plate, metal particles generated due to welding can be blocked from falling through a gap between the electrode plate and the separator, thereby preventing the metal particles from piercing through the separator and reducing the risk of short circuit in the battery.

According to a third aspect, a battery cell is provided, including the electrode assembly according to the second aspect or any possible embodiment of the second aspect; a housing having an opening for accommodating the electrode assembly; and an end cover for closing the opening.

According to a fourth aspect, a battery is provided, including the battery cell according to the third aspect or any possible embodiment of the third aspect described above.

According to a fifth aspect, an electric device is provided, including the battery according to the fourth aspect or any possible embodiment of the fourth aspect, where the battery is used to supply electric energy.

### BRIEF DESCRIPTION OF DRAWINGS

To describe the technical solutions of the embodiments of this application more clearly, the following briefly describes the accompanying drawings required for describing the embodiments of this application. It will be apparent that the accompanying drawings described below show merely some embodiments of this application, and persons of ordinary skill in the art may still derive other drawings from the accompanying drawings without creative efforts.
FIG. 1 is a structural schematic diagram of a vehicle according to an embodiment of this application;
FIG. 2 is a structural schematic exploded view of a battery according to an embodiment of this application;
FIG. 3 is a structural schematic exploded view of a battery cell according to an embodiment of this application;
FIG. 4 is a structural schematic exploded view of an electrode assembly according to an embodiment of this application;
FIG. 5 is a structural schematic diagram of an electrode plate of a battery according to an embodiment of this application;
FIG. 6 is a structural schematic diagram of an electrode plate of a battery according to an embodiment of this application;
FIG. 7 is a structural schematic diagram of an electrode plate of a battery according to an embodiment of this application;
FIG. 8 is a structural schematic diagram of an electrode plate of a battery according to an embodiment of this application; and
FIG. 9 is a structural schematic diagram of an electrode assembly according to an embodiment of this application.

The accompanying drawings are not drawn to scale.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description are all directions shown in the figures, and do not limit the specific structure of the application. In the description of this application, it should also be noted that unless otherwise specified and defined explicitly, the terms "mount", "connect", and "join" should be understood in their general senses. For example, they may be a fixed connection, a detachable connection, or an integral connection, and may be a direct connection or an indirect connection via an intermediate medium. Persons of ordinary skill in the art can understand the specific meanings of these terms in this application as appropriate to the specific situations.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In this application, the battery may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell encapsulated in the battery may be cylindrical, flat, cuboid, or of other shapes, which is not limited in the embodiments of this application either. Battery cells are typically divided into three types by packaging method: cylindrical cell, prismatic cell, and pouch cell. The type of battery is not limited In the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on the migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive electrode tab. The positive electrode current collector and the negative electrode current collector may be collectively referred to as the current collector. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. A current collector uncoated with the negative electrode active substance layer protrudes from the current collector coated with the negative electrode active substance layer and serves as a negative electrode tab. The negative electrode current collector may be made of copper, and the negative electrode active substance may be graphite, carbon, silicon, or the like. To allow a large current to pass through without any fusing, multiple positive electrode tabs are provided and stacked together, and multiple negative electrode tabs are provided and stacked together. The separator may be made of polypropylene (PP), polyethylene (PE), or the like. In addition, the electrode assembly may be a wound structure or a stacked structure. However, the embodiments of this application are not limited thereto.

At present, with the continuous progress of science and technology, power batteries are increasingly used. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of the application field of power battery, the market demand is increasing, and types of traction batteries demanded in the market are also increasing.

In battery technology, the material of the current collector can be a single metal layer, such as copper foil or aluminum foil, or a composite substrate. The structure of the composite substrate is similar to a "sandwich", with a support layer in the middle and metal layers on both sides of the support layer. When the composite substrate is used as a current collector, the outer two layers of the composite substrate need to be connected by Cu/Al foil, that is, the Cu/Al foil is welded to the composite substrate to ensure that the current carried by the composite substrate is introduced into a tab, and then from the tab to an electrode post. Or in other words, the welded Cu/Al foil will subsequently form into a tab through a procedure such as cutting. It can be understood that a support layer of the composite substrate may be an insulation layer.

However, when the Cu/Al foil is welded to the composite substrate, metal particles will appear in a contact area between the composite substrate and the Cu/Al foil and around the contact area due to the welding process, and the metal particles as well as the edge of the Cu/Al foil may pierce through the insulation layer, leading to short circuit between the positive electrode and the negative electrode, resulting in internal short circuit in the battery cell.

In view of this, this application provides a battery electrode plate. The electrode plate includes a current collector, an active substance layer, and a conductive structure. The current collector includes a main body portion and a tab portion disposed in a first direction, the main body portion being covered with the active substance layer, and the tab portion being not covered with the active substance layer; and a first region of the conductive structure is welded to a portion of the tab portion to form a welding mark zone, at least a portion of the welding mark zone being covered with a protective layer. Thereby, with the protective layer applied to at least a portion of the welding mark zone between the current collector and the conductive structure, the protective layer can cover metal particles generated in the welding mark zone due to the welding process. This prevents the metal particles from piercing through the separator, thus further reducing the risk of short circuit in the battery cell and improving the safety of the quality of the battery.

The technical solutions described in the embodiments of this application are applicable to various apparatuses that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

It should be understood that the technical solutions described in the embodiments of this application are not only applicable to the devices described above, but also applicable to all devices using batteries. However, for brevity of description, in the following embodiments, the electric vehicle is used as an example for description.

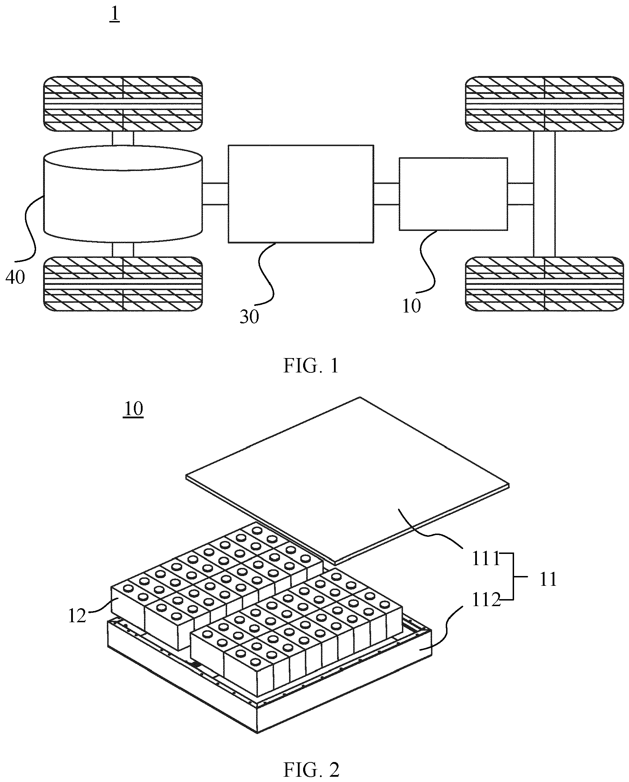

For example, FIG. 1 is a structural schematic diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be provided at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 can be used as not only the operational power source for the vehicle 1, but also as a driving power source for the vehicle 1, replacing or partially replacing fossil fuel or natural gas to provide driving traction for the vehicle 1.

To meet different requirements for power use, the battery 10 may include a plurality of battery cells. For example, FIG. 2 is a structural schematic diagram of the battery 10 according to an embodiment of this application, the battery 10 may include a plurality of battery cells 12. Based on different power demands, battery cells 12 can be set in any quantity. The multiple battery cells 12 may be connected in series, parallel, or series-parallel to achieve greater capacity or power. Because each battery 10 may include a large number of battery cells 12, for ease of installation, the battery cells 12 may alternatively be provided in groups, and each group of battery cells 12 form a battery module. The number of battery cells 12 included in the battery module is not limited, and may be set according to requirements. The batteries may include a plurality of battery modules, which may be connected in series, parallel or mixed.

Optionally, the battery 10 may further include other structures. For example, the battery 10 may further include a busbar, where the busbar is configured to implement an electrical connection among multiple battery cells 12, for example, a parallel connection, a series connection, or a series-parallel connection. Specifically, the busbar may implement the electrical connection among the battery cells 12 by connecting electrode terminals of the battery cells 12. Further, the busbar may be fixed to the electrode terminal of the battery cell 12 by welding. Electrical energy of the plurality of battery cells 12 can be further drawn out of the box through a conductive mechanism. Optionally, the conductive mechanism may also belong to the busbar.

The battery 10 may further include a box 11 (or referred to as a cover), where the box 11 has a hollow structure inside, and the plurality of battery cells 12 are accommodated in the box 11. As shown in FIG. 2, the box 11 may include two portions: an upper box body 111 and a lower box body 112. The upper box body 111 and the lower box body 112 are snap-fitted together. Shapes of the upper box body 111 and the lower box body 112 may be determined based on a shape of the plurality of combined battery cells 12, and at least one of the upper box body 111 and the lower box body 112 has an opening. For example, one of the upper box body 111 and the lower box body 112 included in the box 11 is a hollow cuboid with an opening, and the other is plate shaped for covering the opening. For example, as shown in FIG. 2, the lower box body 112 is a hollow cuboid and has only one face with an opening and the upper box body 111 is plate shaped. In such case, the upper box body 111 covers the opening of the lower box body 112 to form the box 11 with a closed chamber. The chamber may be configured to accommodate the plurality of battery cells 12.

Optionally, the upper box body 111 and the lower box body 112 included in the box 11 in this embodiment of this application may be in other shapes. For example, the upper box body 111 and the lower box body 112 each may be a hollow cuboid and have only one face with an opening, where the opening of the upper box body 111 is disposed opposite the opening of the lower box body 112, and the upper box body 111 and the lower box body 112 are snap-fitted to form the box 11 with a closed chamber. The multiple battery cells 12 are connected in parallel, in series, or in series-parallel, and then placed into the box formed after the upper box body 111 and the lower box body 112 are snap-fitted.

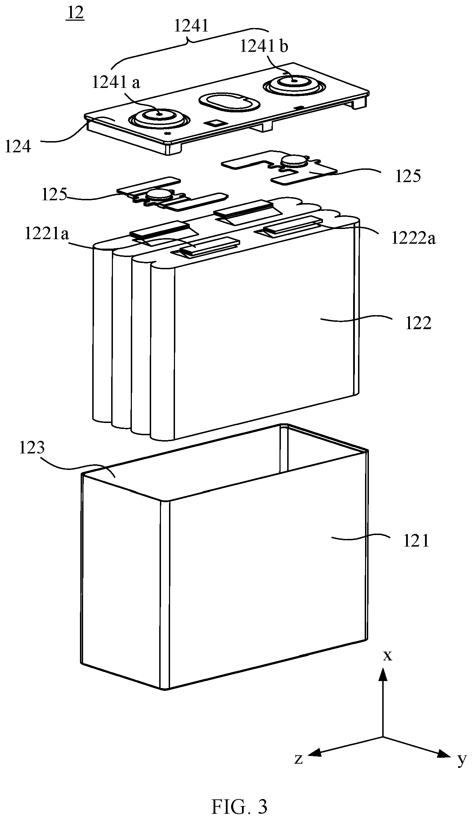

FIG. 3 is a structural schematic diagram of a battery cell 12 according to an embodiment of this application. The battery cell 12 includes one or more electrode assemblies 122, a housing 121, and an end cover 124. The housing 121 and the end cover 124 form a housing or battery case. The wall of the housing 121 as well as the end cover 124 are referred to as the walls of the battery cell 12. For a rectangular-type battery cell 12, the walls of the housing 121 include a bottom wall and four side walls, where the bottom wall and the four side walls are connected to form an accommodating space 123 for placing the electrode assembly 122. The housing 121 is shaped according to the shape of one or more electrode assemblies 122 combined. For example, the housing 121 may be a hollow rectangular or square or cylindrical body, and one of the faces of the housing 121 has an opening so that the one or more electrode assemblies 122 may be placed within the housing 121. For example, when the housing 121 is a hollow cuboid or cube, one face of the housing 121 is an opening face, which means that the face has no wall so that the inside and the outside of the housing 121 are in communication. When the housing 121 is a hollow cylinder, the end face of the housing 121 is an opening face, which means that the end face has no wall so that the inside and the outside of the housing 121 are in communication. The end cover 124 covers the opening of the accommodating space 123 and is coupled to the housing 121 to form a closed cavity in which the electrode assembly 122 is placed. The housing 121 is filled with an electrolyte such as a liquid electrolyte.

The battery cell 12 may also include two electrode terminals 1241. The two electrode terminals 1241 may be disposed on the end cover 124. The end cover 124 is generally in a shape of a flat plate, and the two electrode terminals 1241 are fixed on a flat surface of the end cover 124. The two electrode terminals 1241 are a positive electrode terminal 1241a and a negative electrode terminal 1241b respectively. Each electrode terminal 1241 is provided with a corresponding connecting member 125 or a current collection member. The current connection member is located between the end cover 124 and the electrode assembly 122 and is configured to electrically connect the electrode assembly 122 to the electrode terminal 1241.

As shown in FIG. 3, each electrode assembly 122 has a first tab 1221a and a second tab 1222a. The first tab 1221a and the second tab 1222a have opposite polarities. For example, when the first tab 1221a is a positive electrode tab, the second tab 1222a is a negative electrode tab. The first tabs 1221a of one or more electrode assemblies 122 are connected to one electrode terminal through one connecting member 125, and the second tabs 1222a of one or more electrode assemblies 122 are connected to the other electrode terminal through the other connecting member 125. For example, the positive electrode terminal 1241a is connected to the positive electrode tab through one connecting member 125, and the negative electrode terminal 1241b is connected to the negative electrode tab through the other connecting member 125.

In the battery cell 12, one or more electrode assemblies 122 may be provided depending on an actual need. As shown in FIG. 3, the battery cell 12 is provided with four independent electrode assemblies 122. Optionally, each electrode assembly 122 may include a negative electrode plate, a positive electrode plate, and a separator.

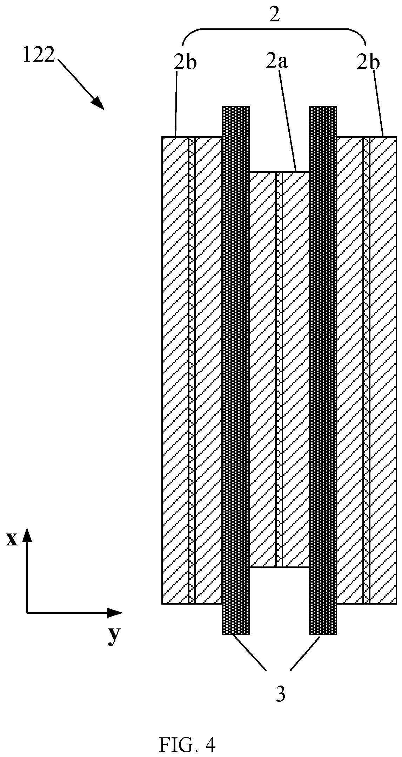

FIG. 4 is a structural schematic exploded view of an electrode assembly 122 according to an embodiment of this application. As shown in FIG. 4, the electrode assembly 122 includes an electrode plate 2 and a separator 3, where the electrode plate 2 further includes a positive electrode plate 2a and a negative electrode plate 2b.

Specifically, the negative electrode plate 2b, the positive electrode plate 2a, and the separator 3 are stacked along the second direction y. The separator 3 is provided between the positive electrode plate 2a and the negative electrode plate 2b to separate the positive electrode plate 2a and the negative electrode plate 2b. In the first direction x, a size of the negative electrode plate 2b is larger than a size of the positive electrode plate 2a, and a positive projection of the positive electrode plate 2a on a plane in which a surface of the negative electrode plate 2b is located does not exceed the negative electrode plate 2b. The first direction x is a width direction of the positive electrode plate 2a, the negative electrode plate 2b, or the separator 3, the second direction y is perpendicular to the first direction x, and the second direction y is in a thickness direction of the negative electrode plate 2b, the positive electrode plate 2a, or the separator 3, that is, the negative electrode plate 2b, the positive electrode plate 2a, and the separator 3 are stacked along their thickness direction.

The negative electrode plate 2b includes a negative electrode current collector and a negative electrode active substance layer provided on the negative electrode current collector. The negative electrode active substance layer may include a carbon material, such as graphite, soft carbon (such as coke), and hard carbon, or may include a non-carbon material, such as nitride, PAS, tin-based oxides, tin alloys, nano-negative electrode materials, and some other intermetallic compounds. The negative electrode current collector collects the current generated by the negative electrode active substance layer in order to form a larger current for external output. Therefore, the negative electrode current collector should have sufficient contact with the negative electrode active material, and it is preferable for the internal resistance to be as small as possible.

The positive electrode plate 2a includes a positive electrode current collector and a positive electrode active substance layer disposed on the positive electrode current collector. The positive electrode active substance layer may include a lithium-nickel oxide, a lithium-cobalt oxide, a lithium-titanium oxide, a nickel-cobalt polyoxide, a lithium-manganese oxide, a lithium-iron-phosphorus oxide, and the like. The positive electrode current collector collects the current generated by the positive electrode active substance layer in order to form a larger current for external output. Therefore, the positive electrode current collector should have sufficient contact with the positive electrode active material, and it is preferable for the internal resistance to be as small as possible.

In the structure of the battery 10, the separator 3 is one of the key inner components. The performance of the separator 3 determines the interface structure and internal resistance of the battery 10, and directly affects the capacity, cycling, safety performance and other characteristics of the battery 10. The separator 3 with excellent performance plays an important role in improving the overall performance of the battery 10. The main function of the separator 3 is to separate the positive electrode plate 2a and the negative electrode plate 2b of the battery 10, to prevent the two poles from contacting and short-circuiting. In addition, the separator 3 further has the function of allowing electrolyte ions to pass through. The separator 3 material is non-conductive, and its physical and chemical properties have a great influence on the performance of the battery 10. Different types of batteries 10 use different separators 3. For example, in lithium batteries 10, since the electrolyte is an organic solvent system, a separator 3 material that is resistant to organic solvents is needed. Generally, a high-strength, thin-film polyolefin porous membrane is used.

During the production process of a battery 10, metal burrs inevitably present on the current collector of the electrode plate affect the performance of the battery 10. To ensure the performance and safety of use of the battery 10, it is common practice during the production of electrode plates to control the size of the metal burrs using instruments according to the overall quality requirements of the electrode assembly. This is to prevent the metal burrs from affecting the performance of the battery 10.

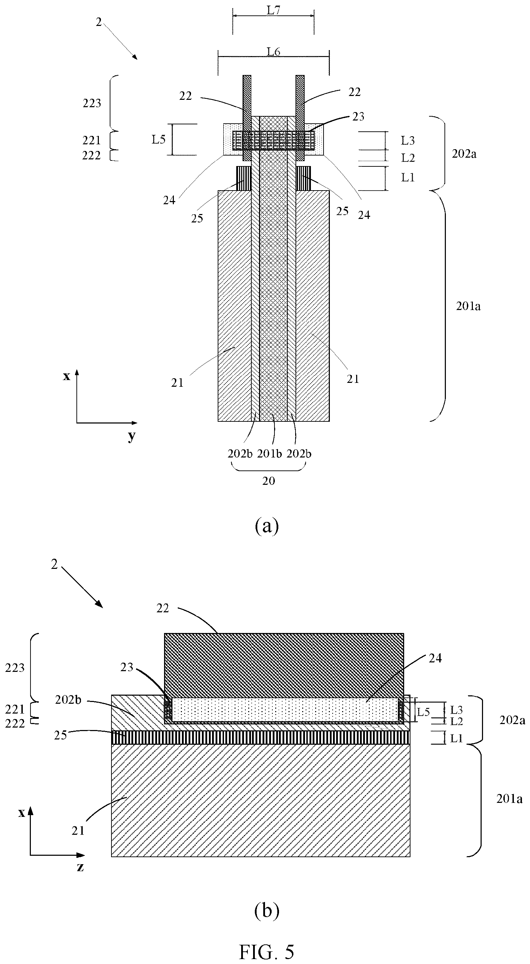

For example, the structure of the electrode plate and electrode assembly of a battery provided in this application is illustrated below with reference to FIG. 5 to FIG. 9.

FIG. 5 is a structural schematic diagram of an electrode plate 2 of a battery according to an embodiment of this application. (a) in FIG. 5 illustrates a side view of the electrode plate 2, and (b) in FIG. 5 illustrates a main view of the electrode plate 2.

Notably, the electrode plate 2 shown in FIG. 5 may be a negative electrode plate or a positive electrode plate, and this application does not limit this.

As shown in FIG. 5, the electrode plate 2 includes a current collector 20, an active substance layer 21, and a conductive structure 22. The current collector 20 includes a main body portion 201a and a tab portion 202a disposed in a first direction x. The main body portion 201a is covered with the active substance layer 21, and the tab portion 202a is not covered with the active substance layer 21. A first region 221 of the conductive structure 22 is welded to a portion of the tab portion 202a to form a welding mark zone 23. At least a portion of the welding mark zone 23 being covered with a protective layer 24, which means that the entire or a portion of the welding mark zone 23 can be covered with the protective layer 24. For example, as shown in FIG. 5, all portions of the welding mark zone 23 are covered with a protective layer 24.

Notably, the conductive structure 22 may be a metal foil, such as a Cu/Al foil, which is not limited by the embodiments of this application.

The conductive structure 22 is welded to the tab portion 202a of the current collector 20 so as to ensure the current flow capability. For example, the welding may be in the form of roll welding. However, the welding may result in metal particles being generated in the welding mark zone 23, and the metal particles may pierce through the separator. For this, in the embodiment of this application, the protective layer 24 is utilized to cover the welding mark zone 23 to avoid piercing through the separator.

Thereby, with the protective layer 24 applied to at least a portion of the welding mark zone 23 between the current collector 20 and the conductive structure 22, the protective layer 24 can cover metal particles generated in the welding mark zone 23 due to the welding process. This can prevent the metal particles from piercing through the separator and leading to short circuit in the battery, improving the safety of the battery.

In an embodiment of this application, the current collector 20 may include a first support layer 201b and a metal layer 202b provided on each of on two sides of the first support layer 201b; and the conductive structure 22 is welded to a portion of the metal layer 202b of the tab portion 202a to form the welding mark zone 23.

Notably, when the current collector 20 includes the first support layer 201b and the metal layer 202b provided on each of the two sides of the first support layer 201b, the current collector 20 may be a composite substrate. The conductive structure 22 is welded to the metal layer 202b of the current collector 20. For example, under a condition that the conductive structure 22 is a Cu/Al foil and the current collector 20 is a composite substrate, the Cu/Al foil being welded to the metal layer of the composite substrate can allow the electric current generated by the metal layer of the composite substrate to be gradually directed to the tab, electrode post, and the like of the battery through the Cu/Al foil.

Therefore, with the current collector 20 of a three-layer structure and the conductive structure 22 welded to the current collector 20, it is possible to improve the conductivity of the current collector 20 while reducing the weight of the battery.

In an embodiment of this application, the conductive structure 22 includes a second region 222, the first region 221, and a third region 223 disposed in the first direction x, where the second region 222 is closer to the main body portion 201a relative to the first region 221, the third region 223 is farther away from the main body portion 201a relative to the first region 221, and an edge of the second region 222 closer to the main body portion 201a is covered with the protective layer 24.

Notably, the first region 221 is a region on the conductive structure 22 used for welding to the metal layer 202b of the current collector 20. If a direction indicated by the first direction x is up and a direction opposite to the direction indicated by the first direction x is down, the second region 222 is a region below the first region 221, and the third region 223 is a region above the first region 221.

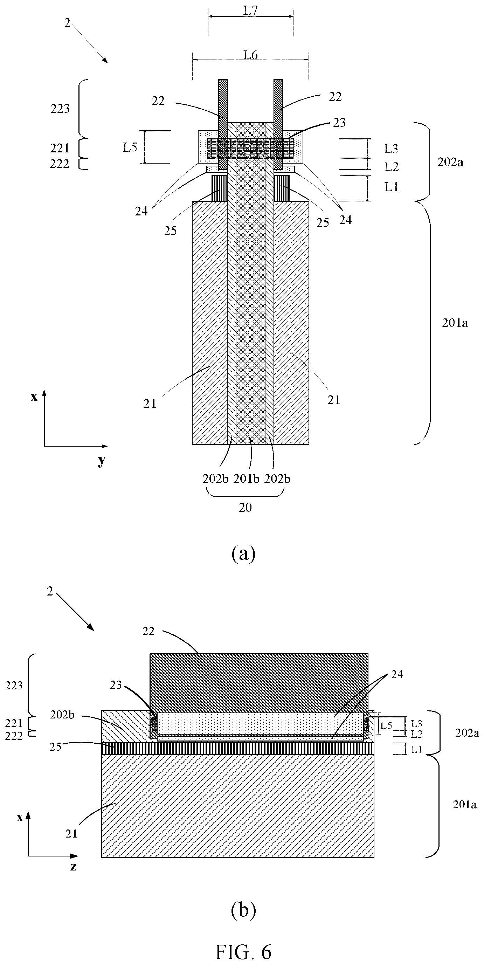

For example, the edge of the second region 222 of the electrode plate 2 shown in FIG. 6 is covered with the protective layer 24. That is, a difference as compared to FIG. 5 is that in the electrode plate 2 shown in FIG. 6, the edge of the second region 222 is also covered with the protective layer 24 in addition to the welding mark zone 23 being covered with the protective layer 24.

Therefore, with the protective layer 24 covering the edge of the second region 222, it is possible to prevent the edge of the second region 222 of the conductive structure 22 from piercing through the separator and leading to short circuit in the battery, improving the safety of the battery.

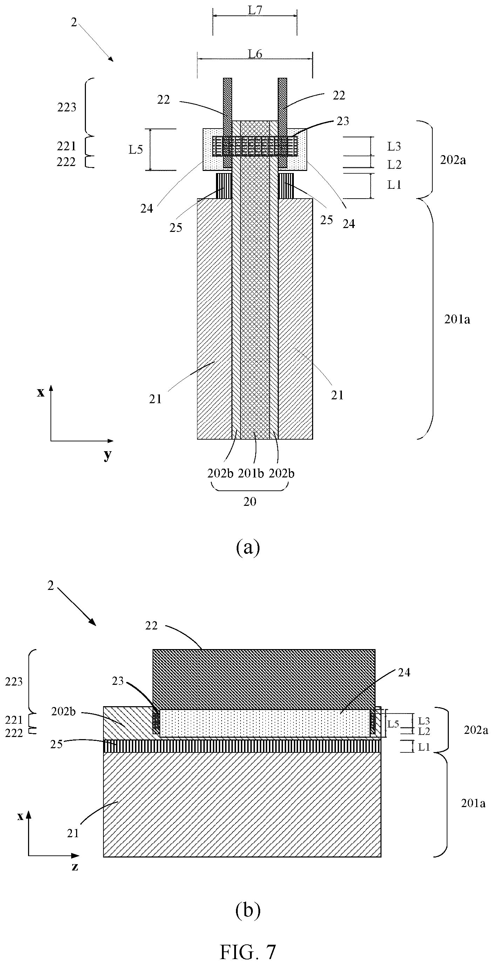

Optionally, the second region 222 is covered with the protective layer 24. In other words, the second region 222 is all covered with the protective layer 24, instead of only covering the edge of the second region 222 with the protective layer. This can better avoid the risk of piercing through the separator when the second region 222 is folded over, improving the safety of the battery. For example, the second region 222 of the electrode plate 2 shown in FIG. 7 are all covered with the protective layer 24. To be specific, compared with FIGs. 5 and 6, the protective layer 24 in FIG. 7 covers all of the welding mark zone 23 and the second region 222, thereby better avoiding the risk of piercing through the separator by the metal particles or when the second region 222 is folded over.

In the embodiment of this application, size L5 of the protective layer 24 in the first direction x is greater than or equal to a sum of size L3 of the welding mark zone 23 in the first direction x and size L2 of the second region 222 in the first direction x.

Notably, as shown in FIG. 4, the size L5 of the protective layer 24, the size L3 of the welding mark zone 23, and the size L2 of the second region 222 in the first direction x may be widths of the protective layer 24, the welding mark zone 23, and the second region 222, respectively. In this case, the width of the protective layer 24 is greater than or equal to a sum of the widths of the welding mark zone 23 and the second region 222. In other words, it is necessary to set the protective layer 24 to completely cover the welding mark zone 23 and the second region 222. Therefore, it is necessary to set the width of the protective layer 24 to be greater than or equal to the sum of the widths of the welding mark zone 23 and the second region 222.

Therefore, setting the size of the protective layer 24 in the first direction x allows the protective layer 24 to cover the welding mark zone 23 and the second region 222, preventing the second region 222 and metal particles in the welding mark zone 23 from piercing through the separator, thereby improving the safety of the battery.

Optionally, the above size L3 of the welding mark zone 23 in the first direction x may range from 2 mm to 8 mm. Limiting the welding mark zone 23 to remain within a specified size range can maintain process stability in the production of the battery and a higher energy density of the battery while ensuring the current flow capability of the conductive structure 22.

Optionally, the above-described size L2 of the second region 222 in the first direction x may range from 0 mm to 1 mm. Thereby, with the size L2 of the second region 222 of the conductive structure 22 in the first direction x limited to be greater than or equal to 0 mm, it is possible to prevent the current collector 20 from being pressed by a weld head in welding to cause damage to the current collector 20 and affect the conductivity and long-term stability of the current collector 20. In addition, with L2 limited to be less than or equal to 1 mm, it is possible to avoid folding of the conductive structure 22 and other problems, thereby improving the safety of the battery.

The size of the second region 222 in the first direction x may be equal to 0 mm. However, in actual production, due to factors such as the device tolerance, the size of the second region 222 in the first direction x is usually greater than 0 mm.

In the embodiment of this application, the size of the protective layer 24 in the second direction y is greater than or equal to the size of the conductive structure 22 in the second direction y. The second direction y is the thickness direction of the electrode plate 2, and the second direction y is perpendicular to the first direction x.

The sizes of the protective layer 24 and the conductive structure 22 in the second direction y may be the thickness of the protective layer 24 and the thickness of the conductive structure 22, respectively. Under a condition that the protective layer 24 and the conductive structure 22 are located in a same plane, the thickness of the protective layer 24 needs to be greater than or equal to the thickness of the conductive structure 22 for the protective layer 24 to cover a sharp portion of the edge of the conductive structure 22.

Thereby, with the size of the protective layer 24 in the second direction y limited to be greater than or equal to the size of the conductive structure 22 in the second direction y, it is possible to ensure that the sharp portion of the edge of the conductive structure 22 is completely covered, completely avoiding the possibility of the edge of the conductive structure 22 piercing through the separator.

In this embodiment of this application, in the second direction y, the surface of the protective layer 24 farther away from the current collector 20 does not exceed the surface of the active substance layer 21 farther away from the current collector 20.

Therefore, the protective layer 24 does not protrude from the surface of the electrode plate 2, thereby avoiding the problem of edge curling during the winding process of the electrode plate and ensuring high production efficiency of the battery.

In the embodiment of this application, the protective layer 24 is an insulation adhesive. The insulation adhesive can further reduce the risk of short circuit in the battery while covering metal particles that may pierce through the separator.

In the embodiment of this application, a second insulation layer 25 is applied between the conductive structure 22 and the active substance layer 21. That is, the second insulation layer 25 is applied to a portion of the tab portion 202a that is close to the main body portion 201a and not covered with the conductive structure 22. Optionally, the second insulation layer 25 is AT11.

The second insulation layer 25 can prevent both the active material and the welding mark zone 23 from being cut during the laser die-cutting of the tab, improving the battery production efficiency.

In the embodiment of this application, the second insulation layer 25 has a size L1 in the first direction x of 1 mm-3 mm.

Therefore, limiting the size of the second insulation layer 25 in the first direction x can prevent the width of the second insulation layer 25 from affecting the height of the jelly cell.

In a possible implementation, in the second direction y, the surface of the protective layer 24 farther away from the current collector 20 exceeds the surface of the second insulation layer 25 farther away from the current collector 20, where the second direction y is the thickness direction of the electrode plate, and the second direction y is perpendicular to the first direction x.

Therefore, with the surface of the protective layer 24 farther away from the current collector 20 exceeding the surface of the second insulation layer 25 farther away from the current collector 20, that is, with the outer surface of the protective layer 24 exceeding the outer surface of the second insulation layer 25, it is possible to ensure that the edge of the conductive structure 22 is completely covered to prevent the edge of the conductive structure 22 from piercing through the separator ensuring the safety of the battery.

In a possible implementation, the protective layer 24 and the second insulation layer 25 at least partially overlap. Alternatively, the second insulation layer 25 is at least partially covered with the protective layer 24.

Thus, the protective layer 24 and the second insulation layer 25 are disposed to at least partially overlap. Since the second insulation layer 25 may abut against the conductive structure 22, or there may be a gap between them, with the protective layer 24 and the second insulation layer 25 that are disposed to overlap, it is possible to ensure that the protective layer 24 completely covers the edge of the conductive structure 22, ensuring the safety of the battery.

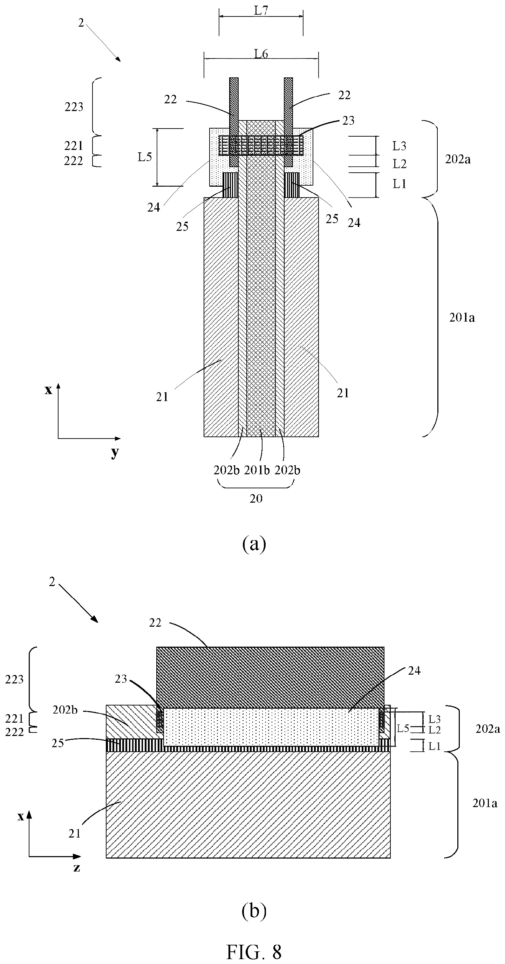

For example, FIG. 8 shows a structural schematic diagram of the electrode plate 2 when the protective layer 24 partially overlaps with the second insulation layer 25 and the outer surface of the protective layer 24 exceeds the outer surface of the second insulation layer 25. It can be seen from FIG. 8 that in this case, the protective layer 24 can completely cover the edge of the second region 222 of the conductive structure 22. In practice, due to the influence of factors such as device tolerances, providing the protective layer 24 to cover a portion of the second insulation layer 25 can make it easy to cover the edge of the second region 222, avoiding the risk of the separator being pierced through, thereby guaranteeing the safety of the battery.

Optionally, the size L7 of the welding mark zone 23 in the second direction y is less than or equal to the sum L6 of the sizes of the current collector 20 and the active substance layer 21 in the second direction y. The second direction y is the thickness direction of the electrode plate, and the second direction y is perpendicular to the first direction x.

Therefore, limiting the size of the welding mark zone 23 in the second direction y can avoid the problem of edge curling during the winding of the electrode plate, ensuring high production efficiency of the battery.

It should be noted that the structure of the electrode plate 2 shown in FIGs. 6 to 8 are similar to that of the electrode plate 2 shown in FIG. 5, with the difference being the coverage area of the protective layer 24. For the description of other structures than the protective layer 24 in FIGs. 6 to 9, reference can be made to the relevant explanations in FIG. 5. The details are not repeated here in the embodiment of this application.

An embodiment of this application further provides an electrode assembly 122, where the electrode assembly 122 can include the electrode plate 2 according to any one of the embodiments described above.

In an embodiment of this application, the electrode assembly 122 may further include the separator 3, and in the second direction y, the surface of the protective layer 24 farther away from the current collector 20 abuts against the surface of the separator 3 closer to the electrode plate 2.

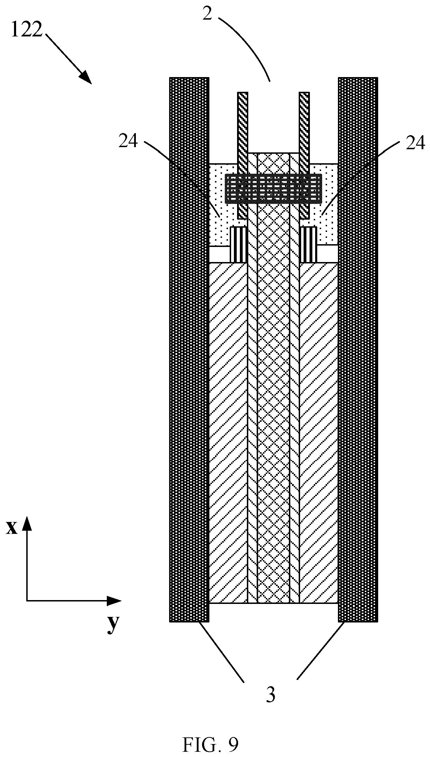

For example, as shown in FIG. 9, the electrode assembly 122 includes the electrode plate 2 and the separator 3, and in the second direction y, the surface of the protective layer 24 included in the electrode plate 2 farther away from the current collector 20 abuts against the surface of the separator 3 closer to the electrode plate 2. It can be understood that for the specific structure of the electrode plate 2 shown in FIG. 9, reference may be made to the relevant structures shown in FIGs. 5 to 8, and the same reference numerals represent the same structures, explanation of which is not repeated herein.

With the surface of the protective layer 24 farther away from the current collector 20 being arranged to abut against the surface of the separator 3 closer to the electrode plate 2, metal particles generated due to welding can be blocked from falling through the gap between the electrode plate 2 and the separator 3, thereby preventing the metal particles from piercing through the separator and reducing the risk of short circuit in the battery.

An embodiment of this application further provides a battery cell 12. The battery cell 12 may include the electrode assembly 122 in the preceding embodiments; a housing having an opening for accommodating the electrode assembly 122; and an end cover for closing the opening of the housing.

An embodiment of this application further provides a battery 10, where the battery 10 may include the battery cell 12 in the foregoing embodiments. In some embodiments, the battery 10 may also include other structures such as a box and a busbar. Details are not repeated herein.

An embodiment of this application further provides an electric device, where the electric device may include the battery 10 in the foregoing embodiments. Optionally, the electric device can be a vehicle 1, ship, spacecraft, or the like, which is not limited in the embodiment of this application.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery electrode plate, **characterized by** comprising a current collector (20), an active substance layer (21), and a conductive structure (22); wherein
the current collector (20) comprises a main body portion (201a) and a tab portion (202a) disposed in a first direction (x), wherein the main body portion (201a) is covered with the active substance layer (21) and the tab portion (202a) is not covered with the active substance layer (21); and
a first region (221) of the conductive structure (22) is welded to a portion of the tab portion (202a) to form a welding mark zone (23), at least a portion of the welding mark zone (23) being covered with a protective layer (24).

2. The electrode plate according to claim 1, **characterized in that** the current collector (20) comprises a first support layer (201b) and a metal layer (202b) provided on each of two sides of the first support layer (201b); and
the conductive structure (22) is welded to a portion of the metal layer (202b) of the tab portion (202a) to form the welding mark zone (23).

3. The electrode plate according to claim 1 or 2, **characterized in that** the conductive structure (22) comprises a second region (222), the first region (221), and a third region (223) disposed in the first direction (x), wherein the second region (222) is closer to the main body portion (201a) relative to the first region (221), the third region (223) is farther away from the main body portion (201a) relative to the first region (221), and an edge of the second region (222) closer to the main body portion (201a) is covered with the protective layer (24).

4. The electrode plate according to claim 3, **characterized in that** the second region (222) is covered with the protective layer (24).

5. The electrode plate according to claim 4, **characterized in that** size L5 of the protective layer (24) in the first direction (x) is greater than or equal to a sum of size L3 of the welding mark zone (23) in the first direction (x) and size L2 of the second region (222) in the first direction (x).

6. The electrode plate according to claim 5, **characterized in that** L3 ranges from 2 mm to 8 mm.

7. The electrode plate according to claim 5 or 6, **characterized in that** L2 ranges from 0 mm to 1 mm.

8. The electrode plate according to any one of claims 4 to 7, **characterized in that** size of the protective layer (24) in a second direction (y) is greater than or equal to size of the conductive structure (22) in the second direction (y), wherein the second direction (y) is in a thickness direction of the electrode plate, and the second direction (y) is perpendicular to the first direction (x).

9. The electrode plate according to claim 8, **characterized in that** in the second direction (y), a surface of the protective layer (24) farther away from the current collector (20) does not exceed beyond a surface of the active substance layer (21) farther away from the current collector (20).

10. The electrode plate according to any one of claims 1 to 9, **characterized in that** the protective layer (24) is an insulation adhesive.

11. The electrode plate according to any one of claims 1 to 10, **characterized in that** a second insulation layer (25) is applied between the conductive structure (22) and the active substance layer (21).

12. The electrode plate according to claim 11, **characterized in that** the second insulation layer (25) has a size L1 of 1 mm-3 mm in the first direction (x).

13. The electrode plate according to claim 11 or 12, **characterized in that** in the second direction (y), a surface of the protective layer (24) farther away from the current collector (20) exceeds a surface of the second insulation layer (25) farther away from the current collector (20), wherein the second direction (y) is in a thickness direction of the electrode plate, and the second direction (y) is perpendicular to the first direction (x).

14. The electrode plate according to any one of claims 11 to 13, **characterized in that** the protective layer (24) and the second insulation layer (25) at least partially overlap.

15. The electrode plate according to any one of claims 1 to 14, **characterized in that** size L7 of the welding mark zone (23) in the second direction (y) is less than or equal to a sum L6 of sizes of the current collector (20) and the active substance layer (21) in the second direction (y), wherein the second direction (y) is in a thickness direction of the electrode plate, and the second direction (y) is perpendicular to the first direction (x).

16. An electrode assembly **characterized by** comprising:
the electrode plate according to any one of claims 1 to 15.

17. The electrode assembly according to claim 16, **characterized in that** the electrode assembly further comprises a separator (3), and a surface of the protective layer (24) farther away from the current collector (20) abuts against a surface of the separator (3) closer to the electrode plate in a second direction (y), wherein the second direction (y) is in a thickness direction of the electrode plate, and the second direction (y) is perpendicular to the first direction (x).

18. A battery cell, **characterized by** comprising:
the electrode assembly according to claim 16 or 17;
a housing having an opening for accommodating the electrode assembly; and
an end cover for closing the opening.

19. A battery, **characterized by** comprising the battery cell according to claim 18.

20. An electric device, **characterized by** comprising the battery according to claim 19, wherein the battery is configured to supply electric energy.
